# FASCICULE DE BREVET EUROPEEN

(11) **EP 4 247 542 B1**
(45) Date de publication et mention de la délivrance du brevet: **13.08.2025**
(21) Numéro de dépôt: 21823385.6
(22) Date de dépôt: 19.11.2021
(51) Int. Cl.: B01J 19/10, C01B 25/37, C01G 9/00

(54) **PROCEDE DE FABRICATION DE PHOSPHATE DE ZINC**
VERFAHREN ZUR HERSTELLUNG VON ZINKPHOSPHAT
METHOD FOR MANUFACTURING ZINC PHOSPHATE

(30) Priorité: 19.11.2020 FR 2011908
(43) Date de publication de la demande: 27.09.2023
(73) Titulaire: OCP SA, Casablanca 20200 (MA); UNIVERSITE MOHAMMED VI POLYTECHNIQUE, Benguerir 43150 (MA)
(72) Inventeur: KHALESS, Khaoula, EL JADIDA (MA); BOULIF, Rachid, EL JADIDA (MA); BENHIDA, Rachid, 06000 NICE (FR)
(74) Mandataire: Regimbeau
(86) Numéro de dépôt international: PCT/MA2021/000020
(87) Numéro de publication internationale: WO 2022/108434

(56) Documents cités:
- EP-A1- 0 009 717
- JUNG: "Sonochemical Synthesis of Amorphous Zinc Phosphate Nanospheres", vol. 30, no. 10, 20 October 2009 (2009-10-20), KR, pages 2280 - 2282, XP055830820, ISSN: 0253-2964, Retrieved from the Internet <URL:http://journal.kcsnet.or.kr/main/j_search/j_archives.htm?qpage=j_search&spage=b_bkcs&dpage=ar> DOI: 10.5012/bkcs.2009.30.10.2280
- ONODA H. ET AL: "Influence of pH, concentration of sodium lactate as an additive and ultrasonic treatment on synthesis of zinc phosphate white pigments", INTERNATIONAL JOURNAL OF COSMETIC SCIENCE., vol. 36, no. 4, 1 August 2014 (2014-08-01), NL, pages 321 - 326, XP055830312, ISSN: 0142-5463, DOI: 10.1111/ics.12129
- YU CHANG-LIN ET AL: "Progress in sonochemical fabrication of nanostructured photocatalysts", RARE METALS - XIYOU JINSHU, PRESS OF METALLURGICAL INDUSTRY, BEIJING, CN, vol. 35, no. 3, 2 February 2016 (2016-02-02), pages 211 - 222, XP035962028, ISSN: 1001-0521, [retrieved on 20160202], DOI: 10.1007/S12598-016-0694-7

## Description

### DOMAINE DE L'INVENTION

La présente invention concerne un procédé de fabrication de phosphate de zinc catalysé par les ultrasons.

### ARRIERE-PLAN DE L'INVENTION

Le phosphate de zinc (Zn₃(PO₄)₂) se présente généralement sous forme de solide blanc, insoluble dans l'eau. Il existe dans la nature sous forme de minerai et peut se présenter sous différentes formes plus au moins hydratées et/ou complexées avec d'autres métaux, formant l'hopéite, parahopeite, tarbuttite, la phosphophyllite, etc.

Le phosphate de zinc est couramment utilisé et ce depuis plusieurs années en cimenterie et en dentisterie et dans plusieurs autres applications industrielles. Un des avantages majeurs du phosphate de zinc est qu'il confère aux matériaux des propriétés de collage et de bouchage extrêmement efficaces. Il est par ailleurs connu pour ces performances et sa rapidité de prise. Il est également utilisé pour ses propriétés anti-corrosion dans la protection des surfaces métalliques grâce, entre autres, à son excellente propriété d'adhérence. Ainsi, le phosphate de zinc est largement utilisé comme pigment minéral anticorrosion dans les systèmes de revêtement de protection. Les fabricants de peinture l'utilisent pour produire des peintures industrielles anticorrosion, par exemple dans les peintures automobiles, aéronautiques ou marines [1].

Le phosphate de zinc fait partie des dérivés du phosphate. Il est formé par réaction entre de l'oxyde de zinc en bouillie aqueuse et de l'acide phosphorique purifié. Au terme de la réaction, l'eau est extraite par filtration et le phosphate de zinc constituant le filtrat est séché avant d'être broyé et conditionné. La réaction de prise correspond à une réaction chimique entre un liquide et un solide. L'action de l'acide phosphorique sur l'oxyde de zinc se traduit par la formation de divers phosphates hydratés. Ainsi, il existe quatre types de réactions :

ZnO + 2 H₃PO₄ → Zn(H₂PO₄)₂, H₂O

ZnO + H₃PO₄ + 2 H₂O → ZnHPO₄, 3 H₂O

3ZnO + 2 H₃PO₄ → Zn₃(PO₄)₂, 2H₂O + H₂O

ZnO + 2 H₃PO₄ + H₂O → Zn₃(PO₄)₂, 4 H₂O

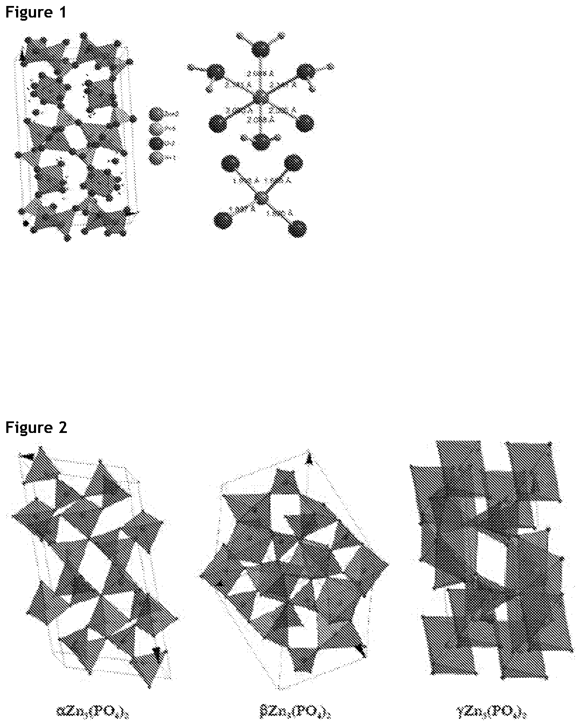

Le composé Zn₃(PO₄)₂.4H₂O, encore appelé hopéite, existe sous deux formes allotropiques α et B de groupe d'espace Pnma, de paramètres de maille et de structures cristallines extrêmement proches, les seules différences étant la position des atomes d'hydrogène qui induit une biréfringence et des charges de surface distinctes pour les deux composés [1, 6]. Cependant, quelle que soit la forme allotropique, l'hopéite a une stabilité limitée en fonction de la température. En effet, le matériau commence à se déshydrater dès 70°C [2]. Les hopéites de forme α et B ont exactement les mêmes mécanismes de déshydratation aux mêmes températures. La première étape débute vers 70°C et a pour température critique T1/2 120° C. Elle se traduit par la perte de deux molécules d'eau pour obtenir un produit de formule Zn₃(PO₄)₂.2H₂O. La dernière étape autour de 300°C est due à la perte des deux dernières molécules d'eau pour obtenir un produit anhydre de formule Zn₃(PO₄)₂ [2]. La structure de l'hopéite et les détails des polyèdres de coordination du zinc dans la structure sont présentés à la figure 1.

L'hopéite est constituée d'enchaînement de tétraèdres [ZnO₄] et [PO₄] et d'octaèdres [ZnO₂(H₂O)₄]. La structure peut être représentée comme l'alternance de trois plans respectivement constitués d'octaèdres [ZnO₂(H₂O)₄] (noté O) de tétraèdre [ZnO₄] (noté Z) et [PO₄] (noté P) suivant la direction b, par répétition du motif O-P-Z-P. Les paramètres de maille des hopéites α et B et du produit dihydraté obtenu après la première déshydratation sont présentés dans le tableau 1.

**Tableau 1 : Paramètres de maille de l'hopéite α et B et du composé Zn₃(PO₄)₂.2H₂O [2]**

| Paramètres | αZn₃(PO₄)H₂O | βZn₃(PO₄)₂.4H₂O | Zn₃(PO₄)₂.2H₂O |
|---|---|---|---|
| G.E. | Prima | Pnma | P2₁/c |
| | 10.629(2) | 10.6060(4) | 10.451(7) |
| b (Å) | 18.339(3) | 18.2946(5) | 5.036(3) |
| c (Å) | 5.040(1) | 5.0266(2) | 31.437(15) |
| Angle β | 90° | 90° | 92.46° |

Pour des températures supérieures à 300°C, l'hopéite se déshydrate entièrement et donne un orthophosphate anhydre de formule Zn₃(PO₄)₂. L'orthophosphate de zinc présente d'après la littérature trois variétés allotropiques toutes monocliniques α, B et γ [2]. A température ambiante, deux phases sont stables : il s'agit des phases α et γ. La phase B transite réversiblement vers la phase B à 965°C et il est à noter que la phase B n'est observable à température ambiante qu'après une trempe rapide. Le groupe d'espace et les paramètres de maille des trois structures α, B et γ Zn₃(PO₄)₂ sont présentés dans le tableau 1. Les structures cristallines des phases sont présentées en figure 2. Les polyèdres de coordination du zinc sont représentés en vert, ceux du phosphore en violet.

Différentes méthodes ont été proposées pour préparer du phosphate de zinc.

US 2407301 [3] décrit un procédé basé sur le traitement de l'oxyde de zinc avec l'acide phosphorique dans un milieu aqueux à une température allant de 70 °C à 80 °C en présence de zinc métallique pris dans une quantité allant de 1 à 10% en poids d'oxyde de zinc, suivi de la séparation du résidu résultant de phosphate de zinc. Le rendement en phosphate de zinc est de 98%. Le procédé permet de produire du phosphate de zinc assurant des propriétés protectrices et physico-mécaniques élevées de revêtements.

Le phosphate de zinc a été synthétisé par S. Rameshet *et al.* [4] par une autre méthode comprenant l'ajout d'acide orthophosphorique à une solution d'acétate de zinc sous une agitation constante suivi de l'ajout d'hydrate d'hydrazine à la solution obtenue sous agitation pendant 3 heures. Le précipité blanc obtenu est filtré et lavé à l'eau, puis à l'éthanol pour éliminer les impuretés organiques. Le précipité est ensuite calciné dans un four à moufle pendant 24 heures à 300° C. La morphologie et propriétés optiques ont été étudiées par DRX, MEB, MET, FT-IR et spectroscopie Raman.

CN 1164508 [5] propose un autre procédé pour la production du phosphate de zinc. L'oxyde de zinc utilisé présente un degré de qualité inférieure (pureté variant de 50% à 95%) et l'acide phosphorique est issu de l'extraction liquide-liquide. La température de réaction varie de 70 à 90°C, le temps de réaction varie de 40 à 60 min et la vitesse d'agitation varie de 4 à 6 tours/sec.

EP0009175 A1 propose un procédé de fabrication de phosphate de zinc, de formule Zn₃(PO₄)₂,nH₂O (n=0 à 4), par une réaction entre l'oxyde de zinc (20-85% en poids) et l'acide phosphorique (10 à 50% en poids) à une température variant de 10 à 100°C, à une vitesse d'agitation variant de 3000 à 10 000 tr/min. L'oxyde de zinc et l'acide phosphorique haute pureté (procédé membranaire) ont été utilisés dans un rapport molaire de 1,5 pour éviter un pH acide dans le mélange réactionnel, cette réaction a été suivie par séparation et séchage du produit final. Ce procédé a permis de produire du phosphate de zinc possédant des propriétés protectrices, physico-chimiques et mécaniques élevées en tant que constituant de revêtement de peinture à base de liants synthétique. Le rendement obtenu est ≥ 98%.

EP0009717 illustre un procédé de production de phosphate de zinc à partir d'oxyde de zinc, d'acide phosphorique et d'un diluant sous l'influence d'ultrasons à une fréquence de 20 ou de 40 kHz.

Jung et al. (Bull. Korean Chem. Soc. 2009. Vol.30, No.10) propose un procédé de préparation de nanosphères de phosphate de zinc à partir de phosphate de zinc tétrahydrate en présence d'ammoniaque utilisant des ultrasons à une fréquence 20 kHz.

Onoda et al. (International Journal of Cosmetic Science, 2014, 36, 321-326) propose un procédé de préparation de phosphate de zinc à partir de nitrate de zinc et d'acide phosphorique en présence ou non de lactate de sodium sous l'influence d'ultrasons à une puissance de 26W.

Yu et al. (Rare Met. (2016) 35(3) :211-222) fait état des avancées dans le domaine de la préparation de photocatalyseurs nanostructurés par voie sono-chimique. La fréquence des ultrasons varie de 10 à 1000 kHz. Il n'est pas fait état d'un procédé de préparation de phosphate de zinc.

Ainsi, même si divers procédés sont connus pour préparer du phosphate de zinc, un besoin demeure pour la mise à disposition d'un procédé simple, efficace et économique (faibles coûts d'investissements et de fonctionnement) pour fabriquer du phosphate de zinc d'une grande pureté à température ambiante.

### BREVE DESCRIPTION DE L'INVENTION

La présente invention porte sur un procédé de préparation de phosphate de zinc comprenant une étape consistant à faire réagir de l'oxyde de zinc avec de l'acide phosphorique, de préférence de l'acide phosphorique industriel purifié, sous l'action d'ultrasons dont la fréquence est supérieure à 100 kHz.

D'autres aspects de l'invention sont tels que décrits ci-dessous et dans les revendications.

### FIGURES

**Figure 1** : Structure de l'hopéite α [1].
**Figure 2** **:** Structure cristalline des phases α, B et γ Zn₃(PO₄)₂.
**Figure 3** **:** Diffractogramme de RX, (Zn₃(PO₄)₂, 4H₂O) à 20°C obtenu selon l'exemple 2.
**Figure 4** **:** Observation MEB de phosphate de zinc (Zn₃(PO₄)₂) obtenu selon l'exemple 2 (A : grossissement X259 ; grossissement B : X1000 ; C : grossissement X2000 ; D : grossissement X3084).
**Figure 5** : Diffractogramme de RX, Zn₃(PO₄)₂, 2H₂O, Zn₃(PO₄)₂, 4H₂O, ZnO à 20°C obtenu selon l'exemple comparatif 1.

### DESCRIPTION DETAILLEE DE L'INVENTION

La présente invention concerne un procédé de préparation de phosphate de zinc, tout particulièrement de phosphate de zinc présentant une grande pureté (≥ 98%), à partir d'acide phosphorique, tout particulièrement d'un acide phosphorique industriel purifié, sous l'action des ultrasons haute fréquence.

Les ultrasons sont des ondes acoustiques sinusoïdales dont la plage de fréquence se situe entre 16 kHz et 10 MHz. L'unité de mesure des ultrasons est l'Hertz (Hz). L'utilisation des ultrasons en chimie n'était qu'une simple curiosité il y a quelques décennies. Le concept de la cavitation acoustique était peu connu dans le domaine de la chimie appliquée. Avec le prix élevé des réactifs organiques et leurs caractéristiques souvent toxiques, l'utilisation des ultrasons est devenue une voie d'intérêt pour réduire l'utilisation de réactifs et les temps de réaction.

Les inventeurs de la présente invention, qui bénéficient d'une longue expérience de l'activation des réactions chimiques par les ultrasons, démontrée par un ensemble d'articles dans ce domaine [7-11], ont ainsi développé un procédé simple et efficace pour préparer du phosphate de zinc à partir d'acide phosphorique, en particulier d'acide phosphorique industriel purifié, par une réaction, typiquement à température ambiante, sous activation ultrasonique.

Ainsi, le procédé de préparation de phosphate de zinc de la présente invention comprend une étape consistant à faire réagir de l'oxyde de zinc avec de l'acide phosphorique sous l'action d'ultrasons dont la fréquence est supérieure à 100 kHz et typiquement inférieure à 1 MHz.

Les ultrasons dont la fréquence est supérieure à 100 kHz et inférieure à 1 MHz sont désignés dans la présente description par l'expression « ultrasons haute fréquence ».

L'oxyde de zinc employé dans le procédé de la présente invention est typiquement sous forme de particules. La taille des particules n'est pas limitative et sera typiquement choisie en fonction des applications visées. Dans certains modes de réalisation, la taille des particules d'oxyde de zinc varie de 0,1 à 5 µm. Dans certains modes de réalisation, 90% en nombre des particules ont une taille variant de 0,1 à 5 µm. Des particules ayant une taille variant de 0,1 à 5 µm permettent d'augmenter le rendement chimique de la réaction. De telles particules peuvent résulter du broyage de l'oxyde de zinc. Ainsi, dans certains modes de réalisation, le procédé de préparation de phosphate de zinc de la présente invention peut comprendre au préalable une étape de broyage de l'oxyde de zinc pour obtenir des particules de taille variant de 0,1 à 5 µm. Le broyage peut être réalisé par écrasement fort. Un raffinage réalisé au moyen d'une tamiseuse permet ensuite de sélectionner les particules dont la taille varie de 0,1 à 5 µm. La taille des particules peut être mesurée par granulométrie laser.

L'oxyde de zinc peut être un oxyde de zinc de qualité technique (pureté variant de 97% à 98%). Ses caractéristiques physico-chimiques sont les suivantes : Zn 77,14%, Pb 5 ppm, Cu 5 ppm, Cd 20 ppm, Fe 50 ppm et Mn 5 ppm.

L'oxyde de zinc utile dans le cadre de la présente invention peut être extrait de minerais ou issu de déchets industriels.

L'acide phosphorique employé dans le procédé de la présente invention est typiquement un acide phosphorique pur, c'est-à-dire un acide phosphorique présentant une pureté de 99,99%, tel qu'un acide phosphorique industriel purifié. Un tel niveau de pureté d'acide phosphorique permet la préparation de phosphate de zinc de très haute pureté. L'acide phosphorique industriel purifié peut être issu de voie humide par extraction liquide-liquide ou filtration membranaire ou issu de voie thermique. L'acide phosphorique est généralement un acide phosphorique comprenant de 5 à 65% de P₂O₅ (équivalent à de 6,9 à 89,7% de H₃PO₄), de préférence de 10 à 61% P₂O₅ (équivalent de 13,8 à 84,18% de H₃PO₄). Dans certains modes de réalisation, l'acide phosphorique comprend de 10 à 61% de P₂O₅, de préférence de 45 à 61% P₂O₅.

L'acide phosphorique utilisé peut être issu de l'action d'un acide fort, tel que l'acide chlorhydrique, l'acide nitrique ou l'acide sulfurique, sur du phosphate naturel suivi d'une purification par procédé membranaire.

L'acide phosphorique peut être tel que produit par le site industriel de Jorf Lasfar du groupe OCP, Maroc. La concentration de l'acide phosphorique en P₂O₅ est de 61.6%, équivalent à 85% en H₃PO₄.

Les proportions d'oxyde zinc et d'acide phosphorique employées dans le procédé de la présente invention sont typiquement telles que le rapport massique acide phosphorique : oxyde de zinc (H₃PO₄ : ZnO) est supérieur ou égal à 0,3. De manière avantageuse, le rapport acide phosphorique : oxyde de zinc varie de 0,3 à 2, préférentiellement de 0,5 à 2, encore plus préférentiellement de 0,8 à 1,5.

L'oxyde de zinc est typiquement ajouté à l'acide phosphorique graduellement, c'est-à-dire progressivement de manière à maintenir un mélange homogène et éviter la formation d'agglomérats L'ensemble est agité pour homogénéiser le mélange. La durée d'homogénéisation varie typiquement de 1 min à 90 min, de préférence de 5 min à 60 min voire de 5 min à 35 min.

La réaction est typiquement réalisée dans un réacteur.

Les ultrasons haute fréquence catalysent la réaction. L'utilisation des ultrasons hautes fréquences est bénéfique puisqu'elle permet une homogénéisation de la solution : elle permet de dissoudre entièrement l'oxyde de zinc et d'obtenir un gel sable et homogène. L'utilisation des ultrasons haute fréquence permet également une augmentation de la vitesse de réaction et par conséquent une diminution du temps de réaction, une diminution de la consommation en énergie, avec la possibilité de diminuer l'apport de réactif. Les ultrasons haute fréquence sont typiquement appliqués pendant une durée inférieure à 30 min. La durée d'application des ultrasons varie typiquement de 1 à 30 min, de préférence de 5 à 15 min. Il est néanmoins entendu que les ultrasons haute fréquence peuvent être appliqués pendant une durée supérieure à 30 min.

De manière avantageuse, les ultrasons haute fréquence permettent de diminuer le temps réactionnel d'un facteur variant de 6 à 10 pour un rendement identique.

Les ultrasons haute fréquence sont des ondes acoustiques sinusoïdales dont la plage de fréquence se situe entre 100 kHz et 1 MHz. Les ondes se caractérisent par une fréquence exprimée en Hz et une puissance exprimée en W.

La fréquence des ultrasons hautes fréquences utiles dans la présente invention varie de préférence de 100 à 500 kHz, voire de 100 à 200 kHz, typiquement elle est de 170 kHz.

La puissance volumique des ultrasons hautes fréquences utiles dans la présente invention varie typiquement de 100 à 2000 W, de préférence de 100 à 1000 W, typiquement elle est de 1000 W. La puissance volumique optimale est de 1000 W à 170 kHz.

Les ultrasons hautes fréquences peuvent être appliqués au moyen d'un bain à ultrasons, par exemple par immersion du milieu réactionnel, plus exactement du réacteur contenant l'oxyde de zinc et l'acide phosphorique, dans un bain à ultrasons ou au moyen d'une sonde à ultrasons, typiquement en plongeant une sonde ultrasonique dans le milieu réactionnel.

Dans certains modes de réalisation, les ultrasons à haute fréquence sont appliqués dans un bain à ultrasons à 170 kHz dont la puissance volumique est de 1000 W. Les ondes ultrasoniques activent ainsi la réaction.

Il a été montré que plus les fréquences sont élevées, plus les ultrasons hautes fréquences induisent un taux de production du phosphate de zinc élevé pour une même puissance. La fréquence des ultrasons a donc une influence importante et est réglée en fonction de la qualité du produit désiré.

Le produit obtenu est typiquement lavé pour éliminer l'acide phosphorique résiduel et séché. Le lavage est généralement réalisé à l'eau distillée. L'étape de séchage est typiquement réalisée à une température variant de 40 à 100°C, de préférence de 50 à 80°C. Le séchage est typiquement réalisé dans une étuve.

Le séchage à l'étuve est réalisé à une température permettant un séchage le plus rapide possible tout en préservant la qualité du composé cristallisé. A l'issue de ce séchage, le phosphate de zinc sous forme solide est obtenu. Il présente une couleur grise. Sa qualité peut être analysée par des méthodes d'analyse chimique usuelle, telles que la diffractométrie de rayons X (DRX), la microscopie à balayage (MEB), etc.

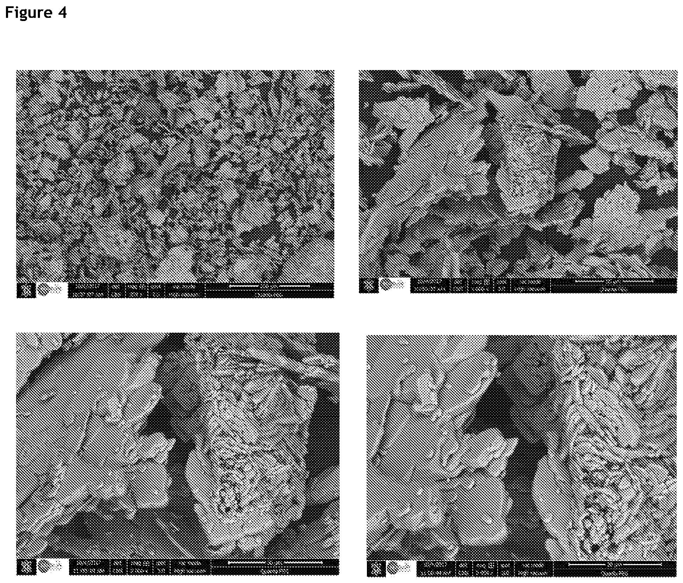

L'observation au microscope électronique à balayage (MEB) couplée à l'analyse dispersive en énergie des rayons X (EDAX) a montré que le phosphate de zinc Zn₃(PO₄)₂, 4H₂O obtenu par le procédé de la présente invention est constitué essentiellement de particules phosphatées de forme carrée, rectangulaire ou des cristaux en forme de feuille de forme irrégulière (figure 4).

Les analyses chimiques ont montré que le produit obtenu par le procédé de la présente invention (Zn₃(PO₄)₂, 4H₂O) comprend 65% en masse de Zn et 31% en masse de PO₄.

Le produit est obtenu avec un bon rendement, typiquement supérieur à 98%, et présente une haute pureté (≥ 98%). Les hautes fréquences peuvent même permettre d'obtenir le produit avec un rendement et une pureté supérieure à 99%.

Le phosphate de zinc obtenu par le procédé de la présente invention peut être utilisé comme pigment de peinture, agent adhésif, agent anti-corrosion, oligoélément, additif dans différentes matrices engrais, cimenterie et dans les applications dentaires, etc.

Un procédé comprenant la préparation d'une phase solide avec une phase liquide est décrit. Le procédé comprend les étapes suivantes :
(a) préparer une phase solide par broyage d'un solide à 0.1-5 µm ;
(b) introduire une phase liquide à un premier débit dans un réacteur de mélange ;
(c) introduire la phase solide obtenue à l'étape (a) à un deuxième débit dans ledit réacteur ;
(d) mélanger sous agitation mécanique dans ledit réacteur la phase solide avec la phase liquide ;
(e) acheminer le mélange dans un bain à ultrason ayant une puissance de 1000 W ;
(f) appliquer des ultrasons à 170 kHz dans le bain à ultrason ;
(g) laver le précipité obtenu avec de l'eau distillée et séché à 60°C pendant 4 heures.

Un tel procédé peut être utile à la préparation de sels de phosphate.

### EXEMPLES

### Matériel

Un bain à ultrasons (1000 W, modèle BT90H) de la compagnie Power Corporation ultrasons de Freeport en Illinois (USA) en combiné avec un générateur d'ultrasons de 170 kHz (Power Corporation Ultrasons) a été utilisé dans les exemples 2 et 3 ci-dessous.

### Exemple comparatif 1 : Fabrication du phosphate de zinc sans ultrasons

Dans cet exemple, la préparation du phosphate de zinc a été effectuée selon les étapes suivantes :
- Préparation d'oxyde de zinc par broyage à 0.1-5 mm (phase solide) ;
- Envoi de l'acide phosphorique 61% P₂O₅ dans un réacteur de mélange (phase liquide) ;
- Envoi d'oxyde de zinc à un deuxième débit dans le réacteur dans un rapport massique ZnO/H₃PO₄ égale à 1 ;
- Mélange sous agitation dans le réacteur de la phase solide avec la phase liquide, pendant 30 min ;
- Lavage du précipité blanc obtenu avec de l'eau distillée et séchage à 60°C pendant 4 heures.

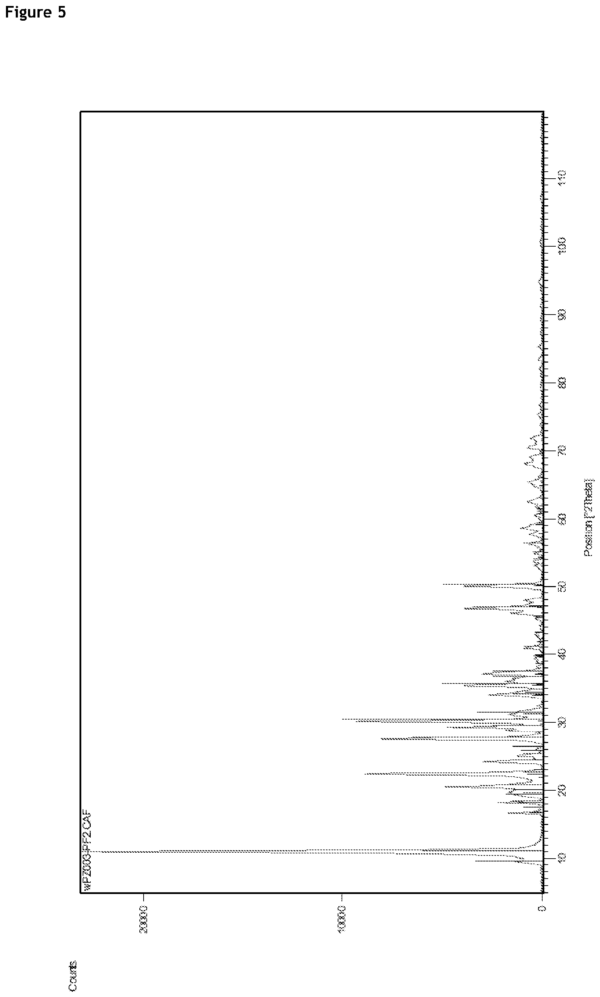

Le produit obtenu se présente sous forme d'une poudre grise. Cette poudre n'est pas un produit pur : elle contient en effet une certaine proportion des autres composés du mélange initial. Les résultats de l'analyse physique par DRX présentés à la figure 5 montrent que le produit final contient un mélange de triphases (Zn₃(PO₄)₂, 2H₂O, Zn₃(PO₄)₂, 4H₂O, ZnO). Le produit final est impur.

### Exemple 2 : Procédé de fabrication de phosphate de zinc incluant une étape d'activation aux ultrasons

Le phosphate de zinc a été préparé par un procédé similaire à celui de l'exemple 1 mais comprenant une étape d'application d'ultrasons haute fréquence. Le procédé comprend les étapes suivantes :
- Broyage de l'oxyde de zinc à 0.1-5 µm (phase solide) ;
- Envoi de l'acide phosphorique 61% P₂O₅ dans un réacteur de mélange (phase liquide) ;
- Envoi d'oxyde de zinc à un deuxième débit dans le réacteur dans un rapport massique ZnO/H₃PO₄ égale à 1 ;
- Mélange sous agitation dans le réacteur de la phase solide avec la phase liquide, pendant 30min ;
- Activation du mélange aux ultrasons, avec une puissance optimale utilisée à 170 kHz pendant 10 min (1000 W) ;
- Lavage du précipité blanc obtenu avec de l'eau distillée et séchage à 60°C pendant 4 heures.

Le mélange est homogène, il parait uniforme à l'œil et sous la main (absence de prise en masse grâce aux ultrasons, granulométrie uniforme). Les observations au microscope montrent un composé homogène avec des grains séparés.

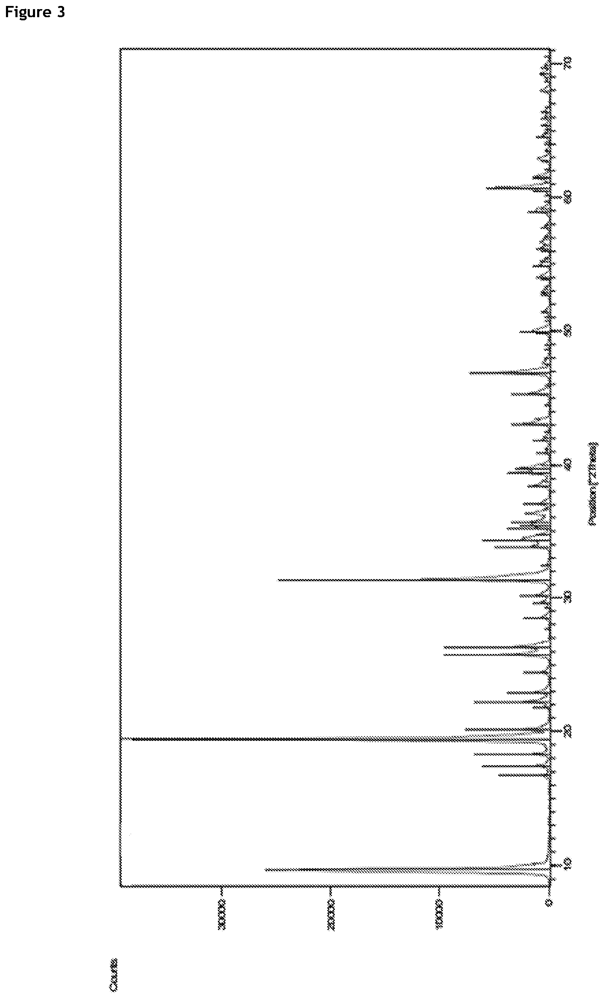

Les analyses physiques par DRX, titrage et les analyses chimiques ont montré que le produit obtenu en incluant une étape d'activation ultrasonique est pur et que dans la composition de Zn₃(PO₄)₂, nH₂O, n dépend de la température et du temps de cristallisation (figure 3).

Le diffractogramme de RX (figure 3) présente un résultat obtenu pour le mélange, catalysé par ultrason, d'acide phosphorique et d'oxyde de zinc qualité technique. Ce mélange a été séché à 60°C jusqu'à la stabilité de la masse finale. Le produit final est bien le phosphate de zinc de la formule chimique : Zn₃(PO₄)₂, 4H₂O.

Nous avons confirmé la bonne reproductibilité de cette méthode pour produire le Zn₃(PO₄)₂, 4H₂O.

Les analyses par DRX ont montré que le produit obtenu est pur. Le rendement de la réaction est supérieur à 99%.

### Exemple 3 : Influence du temps d'agitation

Le phosphate de zinc a été préparé par un procédé similaire à celui de l'exemple 2 dans lequel le temps d'agitation a été réduit. Le procédé comprend les étapes suivantes :
- Broyage de l'oxyde de zinc à 0.1-5 µm (phase solide) ;
- Envoi de l'acide phosphorique 61% P₂O₅ dans un réacteur de mélange (phase liquide) ;
- Envoi d'oxyde de zinc à un deuxième débit dans le réacteur dans un rapport massique ZnO/H₃PO₄ égale à 1 ;
- Mélange sous agitation dans le réacteur de phase solide avec la phase liquide, pendant 10 min ;
- Activation du mélange aux ultrasons, avec une puissance optimale utilisée à 170 kHz pendant 10 min (1000 W) ;
- Lavage de précipité gris obtenu avec de l'eau distillée et séchage à 60°C pendant 4 heures. Les analyses physiques par DRX, titrage complexométrique et les analyses chimiques ont montré qu'un produit pur est obtenu en réduisant le temps d'agitation.

### RÉFÉRENCES

[1] Zhang Jun, Jiang Fengzhi, (preparation of zinc phosphate by liquid-liquid heterogeneous reaction), patent No CN 1164508 A.
[2] F. Rodriguez, D. Hernandez, J. Garcia-Jaca, H. Ehrenberg and H. Weitzel, (Optical study of the piezochromic transition in CuMoO4 by pressure spectroscopy), Physical Review B, Vol. 61, Number 24, 2000, 16497 - 16501
[3] Natalia E Danjushevskaya, Pocess for producing zinc phosphate. Patent N°US 4207301A.1980.
[4] S. Ramesh and V. Narayanan, synthesis and characterisation of zinc phosphate nanoparticles by precipitation method. Print version ISSN 2347-3207.
[5] Zhang Jun, Jiang Fengzhi,preparation of zinc phosphate by liquid-liquid heterogeneous reaction.patent No CN 1164508 A.
[6] S. Mallouk, K. Bougrin, H. Doua, R. Benhida, M. Soufiaoui. Ultraound-accelerated aromatisation of trans- and cis-pyrazolines under hetrerogeneous conditions using claycop. Tetrahedron Lett. 2004, 45, 4143-4148
[7] M. Driowya, A. Puissant, G. Robert, P. Auberger, R. Benhida, K. Bougrin. Ultrasound-assisted one-pot synthesis of anti-CML nucleosides featuring 1,2,3-triazole nucleobase under iron-copper catalysis. Ultrasonics Sonochem. 2012, 19, 1132-1138
[8] H. Marzag, G. Robert, M. Dufies, K. Bougrin, P. Auberger, R. Benhida. FeCl3-promoted and ultrasound-assisted synthesis of resveratrol O-derived glycoside analogs. Ultrason. Sonochem. 2015, 22, 15-21.
[9] H. Marzag, S. Alaoui, H. Amdouni, A. Martin, K. Bougrin, R. Benhida. Efficient and selective azidation of per-O-acetylated sugars using ultrasound activation: Application to the one-pot synthesis of 1,2,3-triazole glycosides. New. J. Chem. 2015, 5437-5444
[10] S Alaoui, M Driowya, L Demange, R Benhida, K Bougrin. Ultrasound-assisted facile one-pot sequential synthesis of novel sulfonamide-isoxazoles using cerium (IV) ammonium nitrate (CAN) as an efficient oxidant in aqueous medium. Ultrason Sonochem. 2018 ;40, 289-297.

## Revendications

1. Procédé de préparation de phosphate de zinc comprenant une étape consistant à faire réagir de l'oxyde de zinc avec de l'acide phosphorique, de préférence de l'acide phosphorique industriel purifié, sous l'action d'ultrasons dont la fréquence est supérieure à 100 kHz.

2. Le procédé selon la revendication 1 dans lequel l'oxyde de zinc est ajouté graduellement à l'acide phosphorique sous agitation avant application des ultrasons.

3. Le procédé selon la revendication 2 dans lequel la durée d'agitation avant application des ultrasons varie de 1 à 90 minutes, de préférence de 5 à 35 minutes.

4. Le procédé selon l'une des revendications précédentes comprenant en outre une étape de lavage et de séchage du produit obtenu à l'issue de la réaction de l'oxyde de zinc avec l'acide phosphorique.

5. Le procédé selon la revendication 4 dans lequel le séchage est réalisé à une température variant de 40 à 100°C, de préférence de 50 à 80°C.

6. Le procédé selon l'une des revendications précédentes dans lequel le ratio massique acide phosphorique : oxyde de zinc est supérieur ou égal 0,3.

7. Le procédé selon l'une des revendications précédentes dans lequel l'oxyde de zinc est sous forme de particules dont la taille varie de 0,1 à 5 µm telle que mesurée par granulométrie laser.

8. Le procédé selon l'une des revendications précédentes comprenant au préalable une étape de broyage de l'oxyde de zinc pour obtenir des particules dont la taille varie de 0,1 à 5 µm telle que mesurée par granulométrie laser.

9. Le procédé selon l'une des revendications précédentes dans lequel l'acide phosphorique comprend de 5 à 65 % de P₂O₅, de préférence entre 10 à 61% de P₂O₅.

10. Le procédé selon l'une des revendications précédentes dans lequel la fréquence des ultrasons varie de 100 à 500 kHz, de préférence de 100 à 200 kHz.

11. Le procédé selon l'une des revendications précédentes dans lequel les ultrasons sont appliqués à une puissance volumique variant de 100 à 2000W, de préférence de 100 à 1000 W.

12. Le procédé selon l'une des revendications précédentes dans lequel la fréquence des ultrasons est de 170 kHz à une puissance volumique de 1000 W.

13. Le procédé selon l'une des revendications précédentes dans lequel les ultrasons sont appliqués au moyen d'un bain à ultrasons ou d'une sonde ultrasonique.

14. Le procédé selon l'une des revendications précédentes dans lequel le phosphate de zinc présente une pureté supérieure ou égale à 98 %.

15. Le procédé selon l'une des revendications précédentes dans lequel la durée d'application des ultrasons est inférieure à 30 minutes.

## Patentansprüche

1. Verfahren zur Herstellung von Zinkphosphat, umfassend einen Schritt, der darin besteht, Zinkoxid mit Phosphorsäure, vorzugsweise gereinigter industrieller Phosphorsäure, unter Einwirkung von Ultraschall mit einer Frequenz von über 100 kHz in Reaktion zu versetzen.

2. Verfahren nach Anspruch 1, wobei das Zinkoxid der Phosphorsäure vor der Anwendung des Ultraschalls allmählich unter Rühren hinzugegeben wird.

3. Verfahren nach Anspruch 2, wobei die Rührzeit vor der Anwendung des Ultraschalls von 1 bis 90 Minuten, vorzugsweise von 5 bis 35 Minuten, schwankt.

4. Verfahren nach einem der vorstehenden Ansprüche, das ferner einen Reinigungs- und Trocknungsschritt des im Ergebnis der Reaktion des Zinkoxids mit der Phosphorsäure erhaltenen Produkts umfasst.

5. Verfahren nach Anspruch 4, wobei die Trocknung bei einer Temperatur durchgeführt wird, die von 40 bis 100°C, vorzugsweise von 50 bis 80°C, schwankt.

6. Verfahren nach einem der vorstehenden Ansprüche, wobei das Massenverhältnis von Phosphorsäure zu Zinkoxid größer oder gleich 0,3 ist.

7. Verfahren nach einem der vorstehenden Ansprüche, wobei das Zinkoxid in Form von Partikeln vorliegt, deren Größe von 0,1 bis 5 µm, gemessen durch Lasergranulometrie, schwankt.

8. Verfahren nach einem der vorstehenden Ansprüche, das zuvor einen Schritt des Zerkleinerns des Zinkoxids umfasst, um Partikel zu erhalten, deren Größe von 0,1 bis 5 µm, gemessen durch Lasergranulometrie, schwankt.

9. Verfahren nach einem der vorstehenden Ansprüche, wobei die Phosphorsäure 5 bis 65% P₂O₅, vorzugsweise zwischen 10 bis 61% P₂O₅, enthält.

10. Verfahren nach einem der vorstehenden Ansprüche, wobei die Ultraschallfrequenz von 100 bis 500 kHz, vorzugsweise von 100 bis 200 kHz, schwankt.

11. Verfahren nach einem der vorstehenden Ansprüche, wobei der Ultraschall mit einer Leistungsdichte angewendet wird, die von 100 bis 2000 W, vorzugsweise von 100 bis 1000 W, schwankt.

12. Verfahren nach einem der vorstehenden Ansprüche, wobei die Ultraschallfrequenz 170 kHz bei einer Leistungsdichte von 1000 W beträgt.

13. Verfahren nach einem der vorstehenden Ansprüche, wobei der Ultraschall mittels eines Ultraschallbades oder einer Ultraschallsonde angewendet wird.

14. Verfahren nach einem der vorstehenden Ansprüche, wobei das Zinkphosphat eine Reinheit von über oder gleich 98% aufweist.

15. Verfahren nach einem der vorstehenden Ansprüche, wobei die Anwendungsdauer des Ultraschalls weniger als 30 Minuten beträgt.

## Claims

1. A method for producing zinc phosphate comprising a step consisting of reacting zinc oxide with phosphoric acid, preferably purified industrial phosphoric acid, under the action of ultrasound having a frequency greater than 100 kHz.

2. The method according to claim 1, wherein zinc oxide is added gradually to phosphoric acid under stirring, before applying ultrasound.

3. The method according to claim 2, wherein the stirring duration before applying ultrasound ranges from 1 to 90 minutes, preferably from 5 to 35 minutes.

4. The method according to one of the preceding claims, further comprising a step of washing and drying the product obtained at the end of the reaction of zinc oxide with phosphoric acid.

5. The method according to claim 4, wherein the drying is carried out at a temperature ranging from 40 to 100°C, preferably 50 to 80°C.

6. The method according to one of the preceding claims, wherein the mass ratio of phosphoric acid:zinc oxide is greater than or equal to 0.3.

7. The method according to one of the preceding claims, wherein the zinc oxide is in the form of particles, the size of which ranges from 0.1 to 5 µm as measured by laser particle size analysis.

8. The method according to one of the preceding claims comprising, beforehand, a step of grinding zinc oxide in order to obtain particles, the size of which ranges from 0.1 to 5 µm as measured by laser particle size analysis.

9. The method according to one of the preceding claims, wherein the phosphoric acid comprises 5 to 65% P₂O₅, preferably between 10 and 61% P₂O₅.

10. The method according to one of the preceding claims, wherein the ultrasound frequency ranges from 100 to 500 kHz, preferably from 100 to 200 kHz.

11. The method according to one of the preceding claims, wherein the ultrasound is applied at a power density ranging from 100 to 2000 W, preferably from 100 to 1000 W.

12. The method according to one of the preceding claims, wherein the ultrasound frequency is 170 kHz at a power density of 1000 W.

13. The method according to one of the preceding claims, wherein the ultrasound is applied by means of an ultrasound bath or an ultrasound probe.

14. The method according to one of the preceding claims, wherein the zinc phosphate has a purity greater than or equal to 98%.

15. The method according to one of the preceding claims, wherein the duration of application of ultrasound is less than 30 minutes.
